# EUROPEAN PATENT SPECIFICATION

(11) **EP 3 647 169 B1**
(45) Date of publication and mention of the grant of the patent: **14.07.2021**
(21) Application number: 18823457.9
(22) Date of filing: 17.05.2018
(51) Int. Cl.: B62J 9/00, B62J 7/00, B62J 23/00, E05B 49/00, E05B 83/00, E05B 83/16, E05B 83/18, B62H 5/00, B62J 7/04, B62J 9/23, B62J 9/24, B62J 9/30, B62J 11/19

(54) **MOTORCYCLE**
MOTORRAD
MOTOCYCLETTE

(30) Priority: 29.06.2017 JP 2017126916
(43) Date of publication of application: 06.05.2020
(73) Proprietor: Honda Motor Co., Ltd., Tokyo 107-8556 (JP)
(72) Inventor: KAWASUMI, Shinji, Wako-shi Saitama 351-0193 (JP); INOUE, Hayato, Wako-shi Saitama 351-0193 (JP); HORIUCHI, Tetsu, Wako-shi Saitama 351-0193 (JP); NAKAMURA, Takuro, Wako-shi Saitama 351-0193 (JP)
(74) Representative: Dehns
(86) International application number: PCT/JP2018/019187
(87) International publication number: WO 2019/003700

(56) References cited:
- EP-A1- 2 500 246
- EP-A1- 2 882 639
- EP-A2- 1 384 658
- CN-Y- 2 672 227
- JP-A- 2007 099 050
- JP-A- 2007 321 470
- JP-A- 2008 230 292
- JP-A- 2014 043 190
- JP-A- 2016 068 766
- JP-A- 2016 068 766

## Description

The present invention relates to a motorcycle.

Conventionally, there is disclosed a saddle riding-type vehicle provided with a remotely controlled trunk (see Patent Literature 1, for example).

[Patent Literature 1]
Japanese Patent No. 4191361

In Patent Literature 1, a trunk that can be unlocked by a smart key is mounted on a saddle riding-type vehicle. To increase usability, even if a storage unit is detachable from a vehicle body, it is desirable that the storage unit can be unlocked by a smart key without using an ignition key.

An object of the present invention is to provide a motorcycle, a detachable storage unit of which can be unlocked by a smart key.

In EP 3 018 043, which shows the preamble of claim 1, describes a motorcycle having a detachable storage unit is disclosed, wherein the lid of the storage unit can be locked and unlocked using a smart key. A locking mechanism is connected to a power system of the motorcycle via a connection mechanism in order to provide power to an actuator within the storage unit when the smart key is used which operates the lock.

The present invention is a motorcycle provided with a storage unit that is detachable from one part of a vehicle body, where a device for unlocking the storage unit by a smart key is provided, the device includes a connection mechanism that is to be coupled to a locking mechanism for placing the storage unit in a locked state and that includes a member on the one part side of the vehicle body and a member on the storage unit side in a manner allowing the two members to be coupled, an actuator that is connected to the connection mechanism by a cable, a control unit for controlling operation of the actuator , and an unlocking operation unit that is operated at a time of unlocking the storage unit, when an unlocking signal from the unlocking operation unit and an authentication signal from the smart key are input, the control unit causes the actuator to operate, and releases a locked state of the locking mechanism through the cable and the connection mechanism, and the one part of the vehicle body is a rear carrier that is provided on a rear part of the vehicle body, characterized in that a cable cover covering the cable is provided on a lower part of the rear carrier, a rear center cover is provided below the rear carrier, a front end part of the cable cover is connected to the rear center cover, and the cable is routed inside the cable cover and inside the rear center cover, through inside the front end part of the cable cover.

In the invention described above, the actuator may be disposed on an inner side, in a vehicle width direction, than a side cover covering a side part of the vehicle body, and on an outer side, in the vehicle width direction, than a frame member that is disposed on an inner side, in the vehicle width direction, of the side cover.

Furthermore, in the invention described above, a front end part of the cable cover may include a bottom wall that is inclined with front side up, and a circumferential wall that is raised from a circumferential edge of the bottom wall, where the bottom wall may include a cable insertion hole where the cable passes through, a cylindrical portion extending downward from an edge of the cable insertion hole, and an opening portion opened behind the cable insertion hole, and the cylindrical portion may be inserted in a cylindrical portion insertion hole formed on the rear center cover.

The present invention is provided with the device for unlocking the storage unit by the smart key, and the device includes the connection mechanism that is coupled to the locking mechanism for placing the storage unit in a locked state and that includes the member on the one part side of the vehicle body and the member on the storage unit side in a manner allowing the two members to be coupled, the actuator that is connected to the connection mechanism by the cable, the control unit for controlling operation of the actuator, and the unlocking operation unit that is operated at the time of unlocking the storage unit, and when an unlocking signal from the unlocking operation unit and an authentication signal from the smart key are input, the control unit causes the actuator to operate, and releases a locked state of the locking mechanism through the cable and the connection mechanism, and thus, an occupant may unlock the storage unit that is detachably attached, by carrying the smart key and operating the unlocking operation unit, without using an ignition key. The usability of the storage unit may thereby be increased.

In the invention described above, the actuator may be disposed on the inner side, in the vehicle width direction, than the side cover covering a side part of the vehicle body, and on the outer side, in the vehicle width direction, than the frame member that is disposed on the inner side, in the vehicle width direction, of the side cover, and thus, the actuator may be protected by the side cover, and the frame member or a member that is attached to the frame member, and the actuator may be prevented from being vandalized.

Furthermore, in the invention described above, the one part of the vehicle body is the rear carrier that is provided on a rear part of the vehicle body, the cable cover covering the cable is provided on a lower part of the rear carrier, the rear center cover is provided below the rear carrier, the front end part of the cable cover is connected to the rear center cover, and the cable is routed inside the cable cover and inside the rear center cover through the front end part of the cable cover, and thus, the cable may be routed using the inside of the rear center cover below the rear carrier, and the cable may be made shorter while improving an external appearance.

Furthermore, in the invention described above, the front end part of the cable cover may include the bottom wall that is inclined with front side up, and the circumferential wall that is raised from the circumferential edge of the bottom wall, the bottom wall includes the cable insertion hole where the cable passes through, the cylindrical portion that extends downward from the edge of the cable insertion hole, and the opening portion provided behind the cable insertion hole, and the cylindrical portion is inserted in the cylindrical portion insertion hole formed on the rear center cover, and thus, the cable may be covered by the cylindrical portion of the cable cover at a joining part of the cable cover and the rear center cover by inserting the cylindrical portion in the cylindrical portion insertion hole of the rear center cover, and the cable may be prevented from being vandalized. Moreover, because the opening portion is formed at a lower part of the bottom wall, water and the like inside the cable cover may be discharged from the opening portion, and erroneous operation of the cable may be prevented.

[Fig. 1] Fig. 1 is a left side view showing a motorcycle according to the present invention.
[Fig. 2] Fig. 2 is a perspective view showing a top box and its periphery.
[Fig. 3] Fig. 3 is a cross-sectional view showing a rear part of the motorcycle.
[Fig. 4] Fig. 4 is a block diagram showing an unlocking device for unlocking the top box.
[Fig. 5] Fig. 5 is an explanatory diagram showing a cable cover, where Fig. 5(A) is a plan view of the cable cover, and Fig. 5(B) is a left side view of the cable cover.
[Fig. 6] Fig. 6 is an enlarged view of main parts in Fig. 3.
[Fig. 7] Fig. 7 is a perspective view showing the rear part of the motorcycle.
[Fig. 8] Fig. 8 is a plan view showing the rear part of the motorcycle.

Hereinafter, an embodiment of the present invention will be described with reference to the drawings. Additionally, in the description, directions such as front and back, left and right, and up and down are the same as directions relative to a vehicle body unless specified otherwise. Furthermore, in each drawing, a reference sign FR indicates a vehicle front side, a reference sign UP indicates a vehicle top side, and a reference sign LH indicates a vehicle left side.

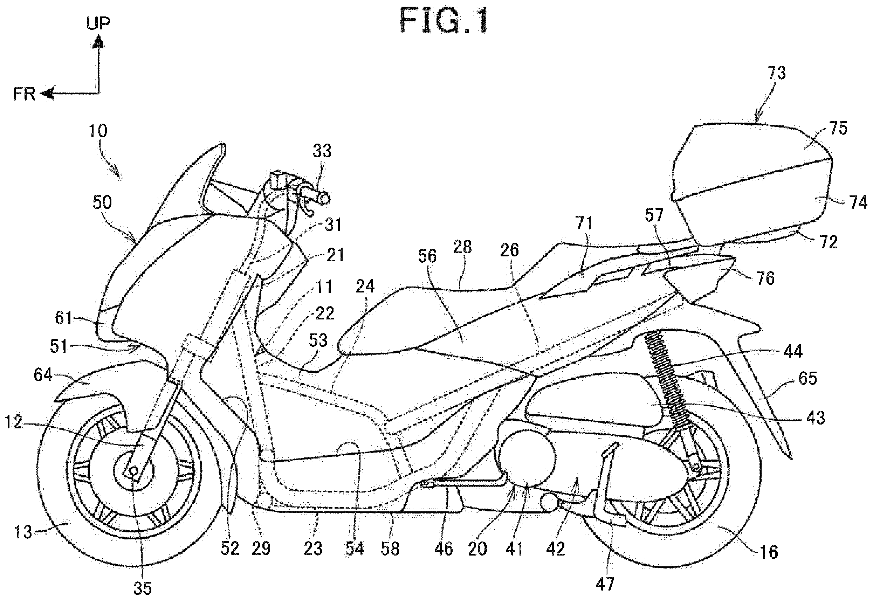

Fig. 1 is a left side view showing a motorcycle 10 according to the present invention.

The motorcycle 10 is a scooter-type, saddle riding-type vehicle including a front wheel 13 that is supported at a front end part of a vehicle body frame 11 through a front fork 12, and a rear wheel 16 that is supported at a lower part of the vehicle body frame 11 through a power unit 20, where the rear wheel 16 is driven by the power unit 20.

The vehicle body frame 11 includes a head pipe 21, a down frame 22, a pair of left and right lower frames 23, a pair of left and right upper frames 24, and a pair of left and right rear frames 26.

The head pipe 21 is disposed on the front end part of the vehicle body frame 11, and steerably supports the front fork 12. The down frame 22 extends downward from the head pipe 21, and a lower end part thereof is connected to a lower cross pipe 29 extending in a vehicle width direction. The left and right lower frames 23 extend downward from left and right of a lower part of the down frame 22, then extend rearward, and then obliquely extend rear-upward. Left and right parts extending in a front-back direction of the down frame 22 are disposed below left and right floorboards 54 described later, respectively. End parts of the lower cross pipe 29 are attached to lower front parts of the left and right lower frames 23, respectively.

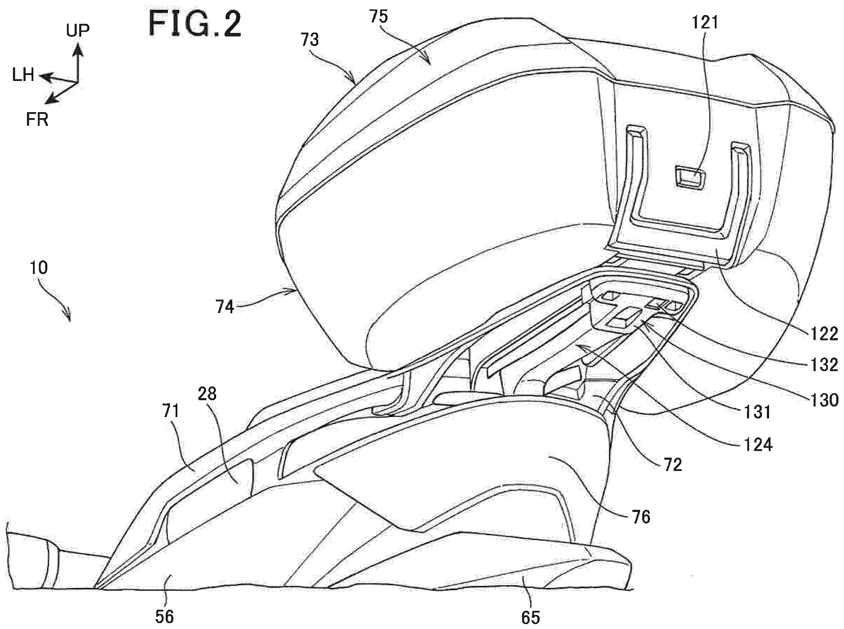

The left and right upper frames 24 obliquely extend rear-downward from left and right of a mid-portion of the down frame 22, then obliquely bend rear-downward, and are connected to the left and right lower frames 23, respectively. The left and right rear frames 26 obliquely extend rear-upward from bent parts of the left and right upper frames 24, and support a storage box (not shown) (see Fig. 2). Tandem seating 28 where a driver and a passenger are to be seated is attached on an upper part of the storage box.

Rear end parts of the left and right lower frames 23 are connected to mid-portions of the left and right rear frames 26.

The front fork 12 includes a steering stem 31 that is rotatably supported on the head pipe 21, and handles 33 are attached to an upper end part of the steering stem 31. Furthermore, the front wheel 13 is supported on a lower end part of the front fork 12 through an axle 35.

The power unit 20 is supported on a lower part of the vehicle body frame 11 through a pivot shaft (not shown) in a manner capable of swinging in an up-down direction, and includes a water-cooled engine 41 forming a front part, and a continuously variable transmission 42 that is provided integrally with a rear part of the engine 41. An output shaft is provided at a rear end part of the continuously variable transmission 42, and the rear wheel 16 is attached to the output shaft. An air cleaner 43 forming an intake device of the engine 41 is provided on an upper part of the power unit 20.

A rear cushion unit 44 is spanned between the rear end part of the continuously variable transmission 42 and a rear part of the vehicle body frame 11.

A side stand 46 is attached to the lower part of the vehicle body frame 11, and a main stand 47 is attached to a bottom part of the power unit 20.

The vehicle body frame 11 is covered by a vehicle body cover 50. The vehicle body cover 50 includes a front cover 51, a pair of left and right leg shields 52, a center cover 53, a pair of left and right floorboards 54, a pair of left and right side covers 56, a rear center cover 57, and a bottom cover 58.

The front cover 51 covers a front side of a front part of the vehicle body frame 11, and a front side and both sides of the front fork 12. A headlight 61 is disposed on the front cover 51. The left and right leg shields 52 extend inward in the vehicle width direction from both side edges of the front cover 51, and cover legs of a driver from the front side. The center cover 53 is disposed behind the front fork 12, and covers between the left and right leg shields 52 while extending below the tandem seating 28. The left and right floorboards 54 are parts where a driver places his/her feet, and extend rearward from lower end parts of the left and right leg shields 52, respectively. The left and right side covers 56 cover parts below both side parts of the tandem seating 28. The rear center cover 57 connects rear end parts of the left and right side covers 56. The bottom cover 58 covers a lower part of the vehicle body.

A front fender 64 covers the front wheel 13 from above, and a rear fender 65 covers the rear wheel 16 from above. Grab rails 71 to be held by a passenger are disposed above the left and right side covers 56 in a manner surrounding both side parts and a rear part of the tandem seating 28. A rear carrier 72 is attached to rear parts of the grab rails 71, and a top box 73 for storing objects is attached to the rear carrier 72. The top box 73 is detachably attached to the rear carrier 72, and includes a box main body 74, and a lid 75 that is provided at an upper part of the box main body 74 in a manner capable of being opened or closed. The lid 75 of the top box 73 can be locked, and to unlock the lid 75 from a locked state, a driver or a passenger carrying a smart key performs an operation of pressing a switch provided on a lower part of the rear carrier 72. A tail light 76 is disposed below the rear center cover 57.

Fig. 2 is a perspective view showing the top box 73 and its periphery.

The top box 73 is detachably attached to the rear carrier 72. An engagement release button 121 is provided on a rear surface of the box main body 74 of the top box 73, the engagement release button 121 being used for manually releasing engagement between an engagement section provided on the box main body 74 and an engagement receiving section provided on the lid 75. Furthermore, an U-shaped grip 122 is swingably attached on the rear surface of the box main body 74, in a periphery of the engagement release button 121. The grip 122 is a part that is held by a hand when the top box 73 is removed from the rear carrier 72, and in the state in the drawing, the grip 122 is in a stored state where it is disposed along the rear surface of the box main body 74. Furthermore, in the case of using the grip 122, the grip 122 is swung from the state where it is along the rear surface, and is caused to stand from the rear surface.

The lid 75 of the top box 73 can be locked by a locking mechanism not shown. That is, locking can be performed in such a way that the lid 75 cannot be opened even when the engagement release button 121 described above is pressed. The locking mechanism is provided inside the top box 73, and an actuator for releasing (unlocking) locking by the locking mechanism is provided on a vehicle body side.

A cable cover 124 for covering a cable provided between the locking mechanism and the actuator mentioned above, and a connection part cover 131 where an unlocking switch 132 for unlocking the locking mechanism is provided are attached on a lower surface of the rear carrier 72.

The connection part cover 131 is attached to a rear end part of the cable cover 124, and forms a part of a connection mechanism 130 for connecting an end part of the cable and the locking mechanism.

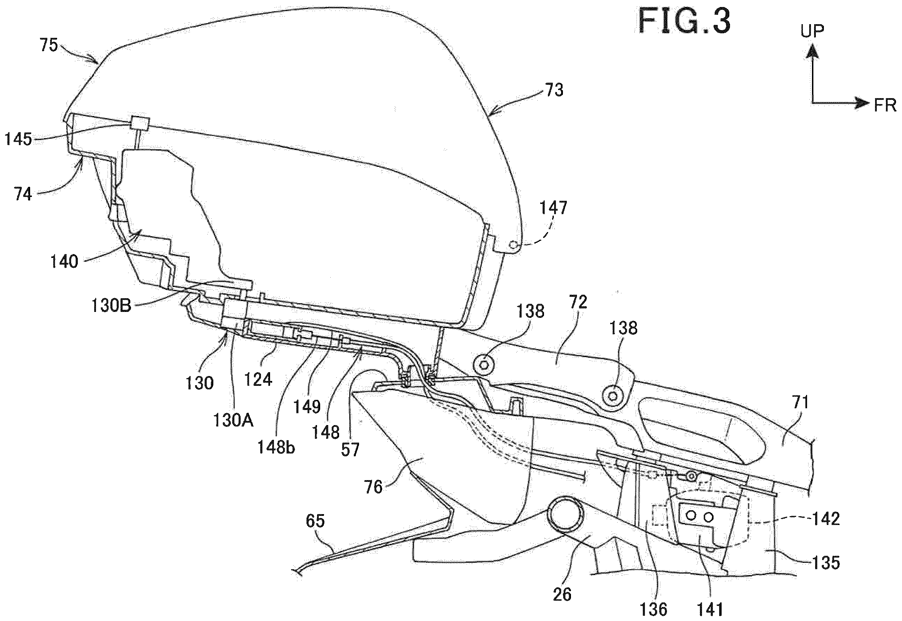

Fig. 3 is a cross-sectional view showing a rear part of the motorcycle 10.

A pair of rising sections 135, 136 that extend upward are provided on a rear part of each of the left and right rear frames 26 while being spaced apart in a front-back direction, and the grab rails 71 are attached to upper end parts of the rising sections 135, 136 of the left and right rear frames 26. Furthermore, the rear carrier 72 is attached to rear parts of the grab rails 71 by a plurality of screws 138.

An actuator 142 is attached to the rising sections 135, 136 of the rear frame 26 on one side (left side) through an attachment bracket 141. In this manner, the actuator 142 may be attached using the rising sections 135, 136 supporting the grab rail 71, and an actuator support member does not specifically have to be provided, and cost can be suppressed.

A locking mechanism 140 that is mechanically unlocked by power from the actuator 142 is provided inside the top box 73. An engagement mechanism 145 including the engagement section of the box main body 74 and the engagement receiving section of the lid 75 is connected to the locking mechanism 140. The lid 75 is swingably supported on a front end part of the box main body 74 through a swing shaft 147.

The connection mechanism 130 is provided across the box main body 74, the rear carrier 72, and the cable cover 124, and the connection mechanism 130 connects one end of a cable 148, the other end of which is connected to the actuator 142, and the locking mechanism 140.

The connection mechanism 130 includes a vehicle body-side connection member 130A provided on the cable cover 124 and the connection part cover 131, and a box-side connection member 130B provided on the top box 73.

The vehicle body-side connection member 130A and the box-side connection member 130B can be mechanically connected or released according to attachment/detachment of the top box 73 from the rear carrier 72.

The cable cover 124 is connected to the rear center cover 57 on the vehicle body side.

The cable 148 and a wire harness 149 that extends from the unlocking switch 132 (see Fig. 2) to the vehicle body side are routed inside the cable cover 124, inside a connection part between the cable cover 124 and the rear center cover 57, and inside the rear center cover 57.

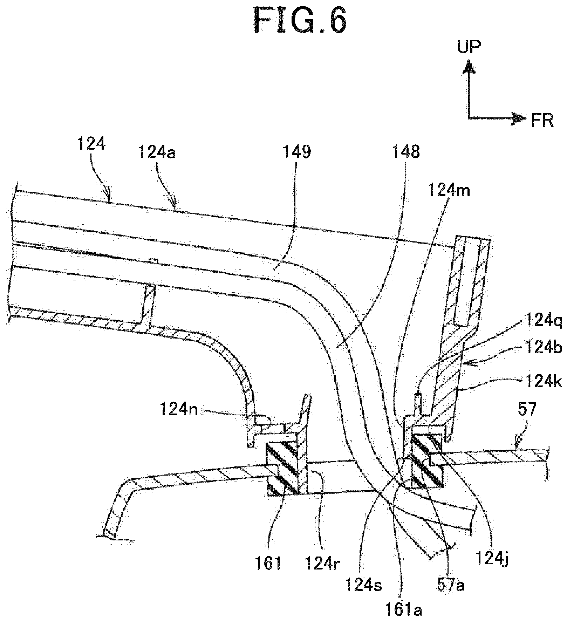

A connection structure between the cable cover 124 and the rear center cover 57 mentioned above will be described with reference to Fig. 6.

As described above, a part of the vehicle body is the rear carrier 72 that is provided on a rear part of the vehicle body, and the cable cover 124 covering the cable 148 is provided on the lower part of the rear carrier 72, and the rear center cover 57 is provided below the rear carrier 72. A front end part of the cable cover 124 is connected to the rear center cover 57, and the cable 148 is routed inside the cable cover 124 and inside the rear center cover 57 through inside the front end part of the cable cover 124.

According to such a configuration, the cable 148 may be routed using the inside of the rear center cover 57 below the rear carrier 72, and the cable 148 may be made shorter while improving an external appearance.

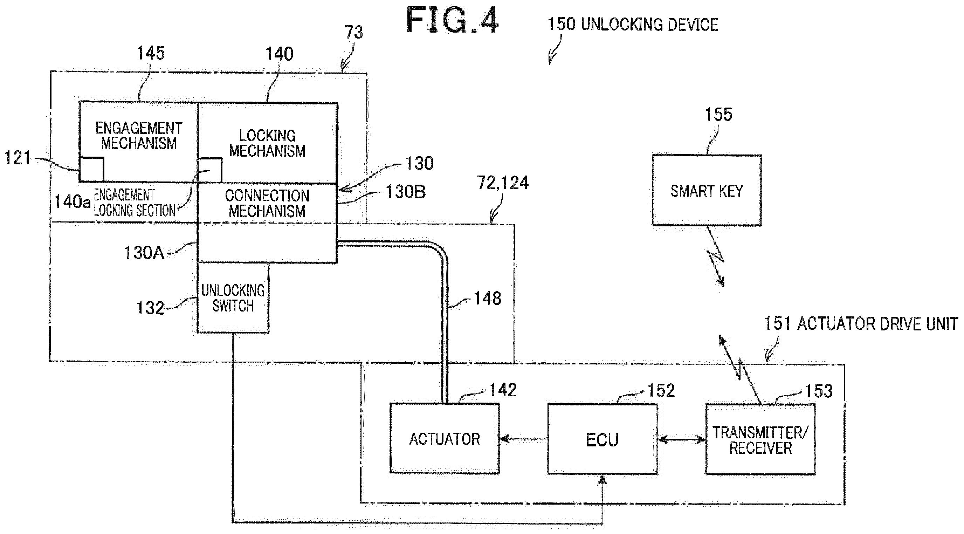

Fig. 4 is a block diagram showing an unlocking device 150 for unlocking the top box 73.

An actuator drive unit 151 for driving the actuator 142 is provided on the vehicle body side of the motorcycle.

The actuator drive unit 151 includes the actuator 142, an electronic control unit (ECU) 152 for controlling driving of the actuator 142, and a transmitter/receiver 153 for performing transmission/reception with respect to outside on the basis of commands from the ECU 152.

The top box 73 is provided with the locking mechanism 140 and the engagement mechanism 145. The locking mechanism 140 includes an engagement locking section 140a for performing locking such that engagement of the engagement mechanism 145 cannot be released. The engagement mechanism 145 includes the engagement release button 121.

The connection mechanism 130 is provided at the top box 73, the rear carrier 72, and the cable cover 124. The unlocking switch 132 is provided at the connection part cover 131 (see Fig. 2) constituting the connection mechanism 130. The unlocking switch 132 forms a part of the actuator drive unit 151.

An occupant (driver or passenger) of the motorcycle 10 carries a smart key 155 for unlocking the top box 73. The smart key 155 communicates with the transmitter/receiver 153 of the actuator drive unit 151.

The actuator drive unit 151, the locking mechanism 140, the connection mechanism 130, and the smart key 155 mentioned above form the unlocking device 150.

An unlocking operation of the top box 73 by the unlocking device 150 described above will be described below.

When a driver or a passenger carrying the smart key 155 presses the unlocking switch 132 below the rear carrier 72, an unlocking signal is input from the unlocking switch 132 to the ECU 152 through the wire harness 149.

Here, the ECU 152 instructs the transmitter/receiver 153, on the basis of the unlocking signal, to transmit a request signal requesting the smart key 155 for transmission of an ID code for authentication.

When the request signal is received, the smart key 155 transmits the ID code for authentication to the transmitter/receiver 153. The ECU 152 to which the smart key-side ID code (authentication signal) is input from the transmitter/receiver 153 compares the smart key-side ID code and an ECU-side ID code that is stored in a memory.

In the case where the ID codes match and authentication is positive, the ECU 152 transmits an actuator drive signal to the actuator drive unit not shown, and causes the actuator 142 to be driven.

As a result, the actuator 142 pulls the cable 148 (more specifically, an inner wire 148b; see Fig. 3), and thus, the engagement locking section 140a of the locking mechanism 140 is operated through the connection mechanism 130, and engagement of the engagement mechanism 145 is allowed to be released. At this time, the ECU 152 notifies an occupant that the top box 73 can be unlocked, by causing display to be performed by an indicator provided on the vehicle body or through flashing of a light such as a tail light, for example.

When the occupant presses the engagement release button 121 of the top box 73 in this state, the lid 75 (see Fig. 2) of the top box 73 can be opened.

As shown in Figs. 3 and 4 as described above, the motorcycle 10 (see Fig. 1) is provided with the top box 73 as a detachable storage unit, at the rear carrier 72, which is a part of the vehicle body. Furthermore, the motorcycle 10 is provided with the unlocking device 150 as a device for unlocking the top box 73 with the smart key 155. The unlocking device 150 includes the connection mechanism 130 that is coupled to the locking mechanism 140 for placing the top box 73 in a locked state and that includes the vehicle body-side connection member 130A as a member on the rear carrier 72 side and the box-side connection member 130B as a member on the top box 73 side in a manner allowing these two members (the vehicle body-side connection member 130A and the box-side connection member 130B) to be coupled, the actuator 142 that is connected to the connection mechanism 130 by the cable 148, the ECU 152 as a control unit for controlling operation of the actuator 142, and the unlocking switch 132 as an unlocking operation unit that is operated at the time of unlocking the top box 73. When the unlocking signal from the unlocking switch 132 and the authentication signal from the smart key 155 are input, the ECU 152 causes the actuator 142 to operate, and releases the locked state of the locking mechanism 140 through the cable 148 and the connection mechanism 130.

According to such a configuration, an occupant may unlock the detachable top box 73 by carrying the smart key 155 and pressing the unlocking switch 132, without using an ignition key. The usability of the top box 73 may thereby be increased.

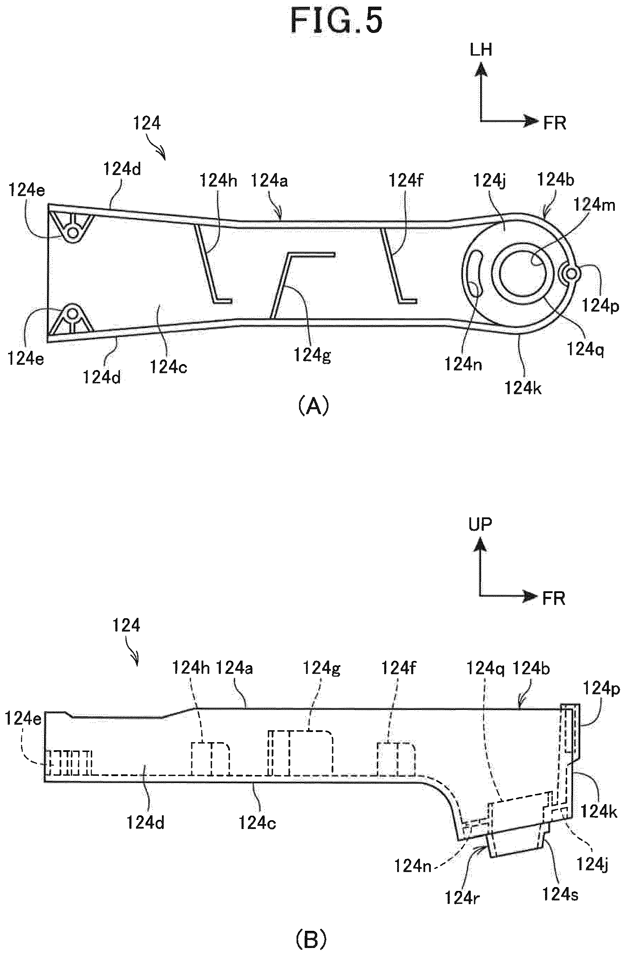

Fig. 5 is an explanatory diagram showing the cable cover 124. Fig. 5(A) is a plan view of the cable cover 124, and Fig. 5(B) is a left side view of the cable cover 124.

As shown in Fig. 5(A), the cable cover 124 is formed from a front-back extending section 124a extending in the front-back direction, and a vehicle body-side connection section 124b that is provided integrally with a front end part of the front-back extending section 124a to connect to the vehicle body side.

The front-back extending section 124a is a part that is U-shaped in a transverse cross section and that includes a bottom wall 124c and a pair of left and right side walls 124d, 124d that are raised from both side edge portions of the bottom wall 124c. A pair of front end-side boss sections 124e, 124e where screws to be attached to the lower surface of the rear carrier 72 (see Fig. 2) are to be screwed into are provided on a rear end part of the front-back extending section 124a. Longitudinal ribs 124f, 124g, 124h that are each formed on the bottom wall 124c in a manner extending from one of the left and right side walls 124d, 124d toward the other side are provided at an intermediate part of the front-back extending section 124a. Rigidity may be increased by providing the longitudinal ribs 124f, 124g, 124h at the front-back extending section 124a, together with the left and right side walls 124d, 124d.

The vehicle body-side connection section 124b includes a bottom wall 124j, and a circumferential wall 124k that is raised from a circumferential edge of the bottom wall 124j.

The bottom wall 124j includes a round through hole 124m opened to penetrate a center portion, and a long through hole 124n opened to penetrate behind the round through hole 124m. The long through hole 124n is curved along an edge of the round through hole 124m. A rear end-side boss section 124p where a screw to be attached to the lower surface of the rear carrier 72 is to be screwed into is provided at a front end portion of the circumferential wall 124k.

As shown in Fig. 5(B), the bottom wall 124j of the vehicle body-side connection section 124b is formed at a position that is lower than the bottom wall 124c of the front-back extending section 124a, and is inclined with front side up. The circumferential wall 124k is connected integrally with the bottom wall 124c and the left and right side walls 124d of the front-back extending section 124a.

Furthermore, the vehicle body-side connection section 124b includes an upper cylindrical portion 124q and a lower cylindrical portion 124r that are raised, respectively, upward and downward in a cylindrical shape from an edge of the round through hole 124m of the bottom wall 124j.

A cut-out 124s is formed on a front side of the lower cylindrical portion 124r.

Fig. 6 is an enlarged view of main parts in Fig. 3.

A through hole 57a is provided on the rear center cover 57 on the vehicle body side, and a rubber grommet 161 is fitted on an edge of the through hole 57a.

The lower cylindrical portion 124r of the vehicle body-side connection section 124b of the cable cover 124 is inserted in an insertion hole 161a opened in the grommet 161.

The cable 148 and the wire harness 149 are routed at least inside the rear center cover 57, inside the vehicle body-side connection section 124b of the cable cover 124 (inside each of the lower cylindrical portion 124r, the round through hole 124m, and the upper cylindrical portion 124q), and inside the front-back extending section 124a of the cable cover 124.

Because the long through hole 124n is formed on the bottom wall 124j of the cable cover 124, at a lower part of the bottom wall 124j, rainwater and the like flowing to the bottom wall 124j is discharged from the long through hole 124n. Furthermore, providing the upper cylindrical portion 124q prevents rainwater and the like from overflowing from the bottom wall 124j to the round through hole 124m.

Furthermore, because the cut-out 124s is formed at a front part of the lower cylindrical portion 124r, radii of curvature of the cable 148 and the wire harness 149 that are bent may be increased, and the cable 148 and the wire harness 149 may be more easily passed through the vehicle body-side connection section 124b.

As shown in Figs. 5(A), 5(B) and Fig. 6 described above, the front end part of the cable cover 124 includes the bottom wall 124j that is inclined with front side up, and the circumferential wall 124k that is raised from the circumferential edge of the bottom wall 124j. The bottom wall 124j includes the round through hole 124m as a cable insertion hole where the cable 148 passes through, the lower cylindrical portion 124r as a cylindrical portion that extends downward from the edge of the round through hole 124m, and the long through hole 124n as an opening portion provided behind the round through hole 124m. The lower cylindrical portion 124r is inserted in the through hole 57a as a cylindrical portion insertion hole formed on the rear center cover 57.

According to such a configuration, the cable 148 may be covered by the lower cylindrical portion 124r of the cable cover 124 at a joining part of the cable cover 124 and the rear center cover 57 by inserting the lower cylindrical portion 124r in the through hole 75a of the rear center cover 57, and a theft prevention effect may be enhanced. Furthermore, because the long through hole 124n is formed at a lower part of the bottom wall 124j, water and the like inside the cable cover 124 may be discharged from the long through hole 124n, and an erroneous operation prevention effect may be enhanced with respect to the cable 148.

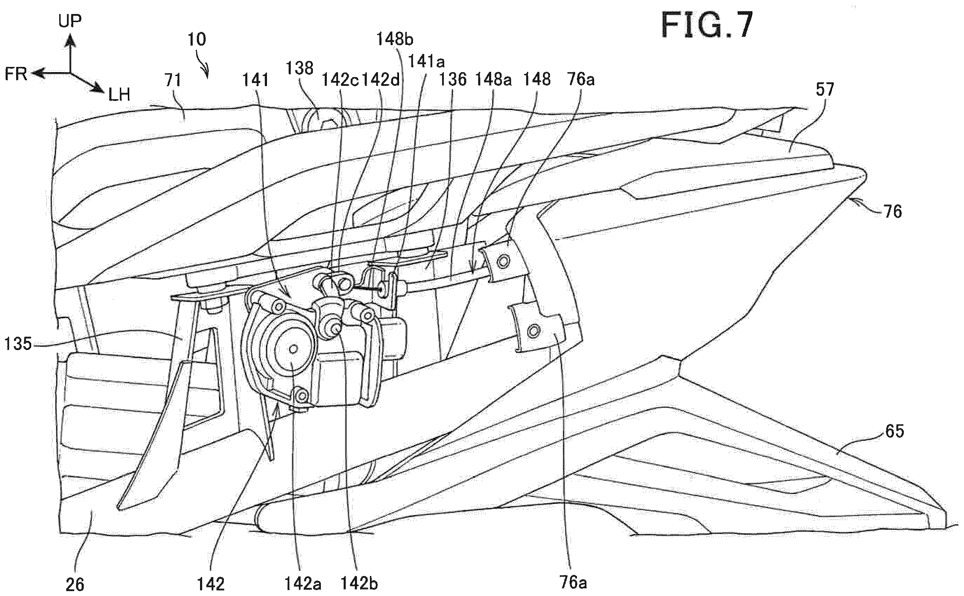

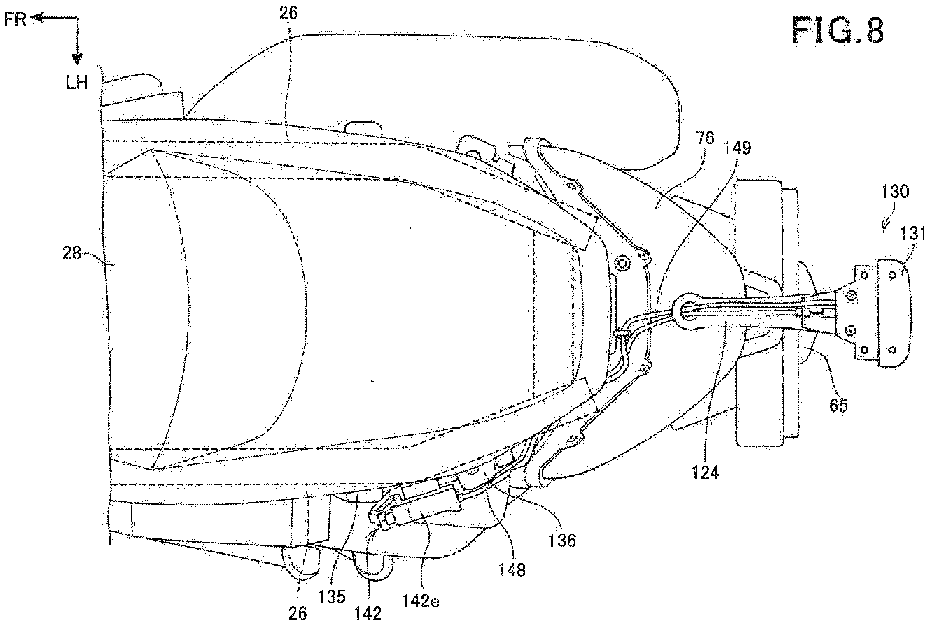

Fig. 7 is a perspective view showing the rear part of the motorcycle 10, and Fig. 8 is a plan view showing the rear part of the motorcycle 10. In Fig. 7, the side cover 56 (see Fig. 1) is removed from the rear part of the vehicle body. Furthermore, in Fig. 8, the left and right side covers 56 (see Fig. 1), the grab rails 71, the rear carrier 72, and the top box 73 are removed from the rear part of the vehicle body.

As shown in Fig. 7, the actuator 142 is provided on an outer side in the vehicle width direction than the rear frame 26 on one side (left side) and the rising sections 135, 136 provided on the rear frame 26.

The actuator 142 includes a drive source 142a including an electric motor or the like, and an arm section 142c that is swung around a support shaft 142b by the drive source 142a.

A wire coupling member 142d is swingably attached to a tip end portion of the arm section 142c.

A cable fixing section 141a for fixing the cable 148 is provided at a rear part of the attachment bracket 141.

The cable 148 includes an outer cable 148a, and an inner wire 148b that is slidably inserted in the outer cable 148a. One end portion of the outer cable 148a is fixed to the cable fixing section 141a of the attachment bracket 141. One end portion of the inner wire 148b is coupled to the wire coupling member 142d of the actuator 142.

A pair of cover attachment sections 76a, 76a that protrude forward are provided at a front end part of the tail light 76, and a rear part of the side cover 56 that is disposed on an outer side of the actuator 142 in the vehicle width direction is attached to the pair of cover attachment sections 76a, 76a.

As shown in Fig. 8, in a plan view, the actuator 142 is disposed along the rear frame 26 and a side surface of the tandem seating 28. The actuator 142 includes a cover member 142e shown in Fig. 8 that covers, from above and side, the arm section 142c shown in Fig. 7 and the inner wire 148b extending from the arm section 142c to the cable fixing section 141a.

The cover member 142e is a component for enhancing a prevention effect for a theft performed by inserting a foreign object into a gap between the tandem seating 28 and the side cover 56 and hooking the foreign object to the arm section 142c or the inner wire 148b to unlock the top box 73.

As shown in Fig. 1, Fig. 7, and Fig. 8 described above, the actuator 142 is disposed on an inner side, in the vehicle width direction, than the side cover 56 covering a side part of the vehicle body, and on the outer side, in the vehicle width direction, than the rear frame 26 as a frame member disposed on an inner side, in the vehicle width direction, of the side cover 56.

According to such a configuration, the actuator 142 may be protected by the side cover 56, and the rear frame 26 or a member attached to the rear frame 26 (such as the rising sections 135, 136), and the actuator 142 may be prevented from being vandalized.

### [Reference Signs List]

10 motorcycle
26 rear frame (frame member)
56 side cover
57 rear center cover
57a through hole (cylindrical portion insertion hole)
72 rear carrier (one part of vehicle body)
73 top box (storage unit)
124 cable cover
124j bottom wall
124k circumferential wall
124m round through hole (cable insertion hole)
124n long through hole (opening portion)
124r lower cylindrical portion (cylindrical portion)
130 connection mechanism
130A vehicle body-side connection member (member on one part side of vehicle body)
130B box-side connection member (member on storage unit side)
132 unlocking switch (unlocking operation unit)
140 locking mechanism
142 actuator
148 cable
150 unlocking device (device for unlocking storage unit)
152 ECU (control unit)
155 smart key

## Claims

1. A motorcycle provided with a storage unit (73) that is detachable from one part (72) of a vehicle body, wherein
a device (150) for unlocking the storage unit (73) by a smart key (155) is provided,
the device (150) includes a connection mechanism (130) that is to be coupled to a locking mechanism (140) for placing the storage unit (73) in a locked state and that includes a member (130A) on the one part (72) side of the vehicle body and a member (130B) on the storage unit (73) side in a manner allowing the two members (130A, 130B) to be coupled, an actuator (142) that is connected to the connection mechanism (130), by a cable (148), a control unit (152) for controlling operation of the actuator (142), and an unlocking operation unit (132) that is operated at a time of unlocking the storage unit (73),
when an unlocking signal from the unlocking operation unit (132) and an authentication signal from the smart key (155) are input, the control unit (152) causes the actuator (142) to operate, and releases a locked state of the locking mechanism (140) through the cable (148) and the connection mechanism (130), and
the one part of the vehicle body is a rear carrier (72) that is provided on a rear part of the vehicle body **characterized in that**,
a cable cover (124) covering the cable (148) is provided on a lower part of the rear carrier (72), a rear center cover (57) is provided below the rear carrier (72), a front end part of the cable cover (124) is connected to the rear center cover (57), and the cable (148) is routed inside the cable cover (124) and inside the rear center cover (57), through inside the front end part of the cable cover (124).

2. A motorcycle according to claim 1, wherein the actuator (142) is disposed on an inner side, in a vehicle width direction, than a side cover (56) covering a side part of the vehicle body, and on an outer side, in the vehicle width direction, than a frame member (26) that is disposed on an inner side, in the vehicle width direction, of the side cover (56).

3. A motorcycle according to claim 1 or 2, wherein a front end part of the cable cover (124) includes a bottom wall (124j) that is inclined with front side up, and a circumferential wall (124k) that is raised from a circumferential edge of the bottom wall (124j), the bottom wall (124j) including a cable insertion hole (124m) where the cable (148) passes through, a cylindrical portion (124r) extending downward from an edge of the cable insertion hole (124m), and an opening portion (124n) opened behind the cable insertion hole (124m), where the cylindrical portion (124r) is to be inserted in a cylindrical portion insertion hole (57a) formed on the rear center cover (57).

## Patentansprüche

1. Motorrad, das mit einer Aufbewahrungseinheit (73) bereitgestellt ist, die von einem Teil (72) einer Karosserie abnehmbar ist, wobei
eine Vorrichtung (150) zum Entriegeln der Aufbewahrungseinheit (73) durch einen intelligenten Schlüssel (155) bereitgestellt ist,
die Vorrichtung (150) einen Verbindungsmechanismus (130) beinhaltet, der zum Positionieren der Aufbewahrungseinheit (73) in einem verriegelten Zustand an einen Verriegelungsmechanismus (140) zu koppeln ist und der ein Element (130A) an der einen Seite des Teils (72) der Karosserie und ein Element (130B) an der Seite der Aufbewahrungseinheit (73) in einer Weise beinhaltet, in welcher die beiden Elemente (130A, 130B) miteinander gekoppelt werden können, und einen Stellantrieb (142), der mit dem Verbindungsmechanismus (130) durch ein Kabel (148) verbunden ist, eine Steuerungseinheit (152) zum Steuern des Betriebs des Stellantriebs (142), und eine Entriegelungsbetriebseinheit (132), die zu einem Zeitpunkt des Entriegelns der Aufbewahrungseinheit (73) betrieben wird,
wenn ein Entriegelungssignal von der Entriegelungsbetriebseinheit (132) und ein Authentifizierungssignal von dem intelligenten Schlüssel (155) eingegeben werden, die Steuerungseinheit (152) bewirkt, dass der Stellantrieb (142) betrieben wird und einen verriegelten Zustand des Verriegelungsmechanismus (140) durch das Kabel (148) und den Verbindungsmechanismus (130) freigibt, und
das eine Teil der Karosserie ein rückwärtiger Träger (72) ist, der an einem rückwärtigen Teil der Karosserie bereitgestellt ist,
**dadurch gekennzeichnet, dass**
eine Kabelabdeckung (124), die das Kabel (148) abdeckt, an einem unteren Teil des rückwärtigen Trägers (72) bereitgestellt ist, eine rückwärtige Mittelabdeckung (57) unterhalb des rückwärtigen Trägers (72) bereitgestellt ist, ein Stirnseitenteil der Kabelabdeckung (124) mit der rückwärtigen Mittelabdeckung (57) verbunden ist und das Kabel (148) im Inneren der Kabelabdeckung (124) und im Inneren der rückwärtigen Mittelabdeckung (57) durch das Innere des Stirnseitenteils der Kabelabdeckung (124) geführt ist.

2. Motorrad nach Anspruch 1, wobei der Stellantrieb (142) an einer inneren Seite, in einer Fahrzeugbreitenrichtung, als eine Seitenabdeckung (56), die ein Seitenteil der Karosserie abdeckt, angeordnet ist und an einer äußeren Seite, in der Fahrzeugbreitenrichtung, als ein Rahmenelement (26) angeordnet ist, das an einer inneren Seite, in der Fahrzeugbreitenrichtung, der Seitenabdeckung (56) angeordnet ist.

3. Motorrad nach Anspruch 1 oder 2, wobei ein Stirnseitenteil der Kabelabdeckung (124) eine untere Wand (124j) beinhaltet, die mit der Vorderseite nach oben geneigt ist, und eine umfangseitige Wand (124k), die von einer umfangseitigen Kante der unteren Wand (124j) erhöht ist, wobei die untere Wand (124j) ein Kabeleinsatzloch (124m) beinhaltet, durch welches das Kabel (148) hindurch geführt ist, einen zylindrischen Abschnitt (124r), der sich nach unten von einer Kante des Kabeleinsatzlochs (124m) erstreckt, und einen Öffnungsabschnitt (124n), der hinter dem Kabeleinsatzloch (124m) geöffnet ist, wobei der zylindrische Abschnitt (124r) in ein Einsatzloch (57a) des zylindrischen Abschnitts, das an der rückwärtigen Mittelabdeckung (57) gebildet ist, einzusetzen ist.

## Revendications

1. Motocyclette pourvue d'une unité de stockage (73) qui est détachable d'une certaine partie (72) d'une carrosserie de véhicule, dans laquelle
un dispositif (150) pour déverrouiller l'unité de stockage (73) par une clé intelligente (155) est prévu,
le dispositif (150) inclut un mécanisme de raccordement (130) qui doit être couplé à un mécanisme de verrouillage (140) pour placer l'unité de stockage (73) dans un état verrouillé et qui inclut un élément (130A) du côté de la certaine partie (72) de la carrosserie de véhicule et un élément (130B) du côté de l'unité de stockage (73) de manière à permettre un couplage des deux éléments (130A, 130B), un actionneur (142) qui est raccordé au mécanisme de raccordement (130), par un câble (148), une unité de commande (152) pour commander un fonctionnement de l'actionneur (142), et une unité de fonctionnement de déverrouillage (132) qui est actionnée à un moment de déverrouillage de l'unité de stockage (73),
lorsqu'un signal de déverrouillage provenant de l'unité de fonctionnement de déverrouillage (132) et un signal d'authentification provenant de la clé intelligente (155) sont entrés, l'unité de commande (152) fait fonctionner l'actionneur (142), et libère un état verrouillé du mécanisme de verrouillage (140) à travers le câble (148) et le mécanisme de raccordement (130), et
la certaine partie de la carrosserie de véhicule est un support arrière (72) qui est prévu sur une partie arrière de la carrosserie de véhicule
**caractérisée en ce**
**qu'**un couvercle de câble (124) couvrant le câble (148) est prévu sur une partie inférieure du support arrière (72), un couvercle central arrière (57) est prévu sous le support arrière (72), une partie d'extrémité avant du couvercle de câble (124) est raccordée au couvercle central arrière (57), et le câble (148) est acheminé à l'intérieur du couvercle de câble (124) et à l'intérieur du couvercle central arrière (57), à travers l'intérieur de la partie d'extrémité avant du couvercle de câble (124).

2. Motocyclette selon la revendication 1, dans laquelle l'actionneur (142) est disposé sur un côté intérieur, dans un sens de la largeur du véhicule, d'un couvercle latéral (56) couvrant une partie latérale de la carrosserie de véhicule, et sur un côté extérieur, dans le sens de la largeur du véhicule, d'un élément de cadre (26) qui est disposé sur un côté intérieur, dans le sens de la largeur du véhicule, du couvercle latéral (56).

3. Motocyclette selon la revendication 1 ou 2, dans laquelle une partie d'extrémité avant du couvercle de câble (124) inclut une paroi inférieure (124j) qui est inclinée avec le côté avant vers le haut, et une paroi circonférentielle (124k) qui est élevée à partir d'un bord circonférentiel de la paroi inférieure (124j), la paroi inférieure (124j) incluant un trou d'insertion de câble (124m) à travers lequel le câble (148) passe, une partie cylindrique (124r) s'étendant vers le bas à partir d'un bord du trou d'insertion de câble (124m), et une partie d'ouverture (124n) ouverte derrière le trou d'insertion de câble (124m), où la partie cylindrique (124r) doit être insérée dans un trou d'insertion de partie cylindrique (57a) formé sur le couvercle central arrière (57).
